Europäisches Patentamt

European Patent Office

Office européen des brevets

(11) Veröffentlichungsnummer: **0 320 617**

**A2**

(12) **EUROPÄISCHE PATENTANMELDUNG**

(21) Anmeldenummer: **88118672.0**

(22) Anmeldetag: **10.11.88**

(51) Int. Cl.4: **F02D 1/10**

(30) Priorität: **18.12.87 DE 3743060**

(43) Veröffentlichungstag der Anmeldung:
**21.06.89 Patentblatt 89/25**

(84) Benannte Vertragsstaaten:
**DE FR GB**

(71) Anmelder: **ROBERT BOSCH GMBH**
**Postfach 10 60 50**
**D-7000 Stuttgart 10(DE)**

(72) Erfinder: **Schwarz, Manfred, Ing.**
**Hofwiesenstrasse 4**
**D-7016 Gerlingen(DE)**
Erfinder: **Braun, Wolfgang, Dipl.-Ing.**
**Haldenrainstrasse 12**
**D-7257 Ditzingen(DE)**
Erfinder: **Alvarez-Avila, Carlos, Dipl.-Ing.**
**Stuttgarterstrasse 12**
**D-7149 Freiberg(DE)**

(54) **Drehzahlregler für Kraftstoffeinspritzpumpen.**

(57) Es wird ein Drehzahlregler für Kraftstoffeinspritzpumpen mit zwei oder drei zur Verstellung eines
Kraftstoffeinspritzmengenverstellorgans (2) zusammenwirkenden Hebeln vorgeschlagen. An einem Hebel, dem Schlepphebel (20), greifen eine Regelfeder
(25) und die Leerlauffeder (32) an. Zwischen
Schlepphebel (20) und Starthebel (5) ist eine Startfeder (29) angeordnet, gegen die die drehzahlabhängige Kraft des Drehzahlsignalgebers (11) arbeitet.
Beim Start der Brennkraftmaschine steht der über
einer Achse (6) mit dem Schlepphebel (20) verbundene Starthebel in einer Ausgangsstellung entsprechend einer Einstellung des Mengenverstellorgan
(2), die einer kleineren als der Vollasteinspritzmenge
entspricht. Beim Start wird in einem ersten Verstellbereich das Mengenverstellorgan (2) zu mehr Kraftstofffördermenge verschoben bis zur Vollasteinspritzmegen. In einem zweiten Verstellbereich wird dann
im Abregelfall durch weitere Verschiebung des Drehzahlsignalgebers (11) das Mengenverstellorgan wieder in Richtung kleiner Kraftstoffmenge verschoben.

FIG. 1

EP 0 320 617 A2

## Drehzahlregler für Kraftstoffeinspritzpumpen

Stand der Technik

Die Erfindung betrifft einen Drehzahlregler für Kraftstoffeinspritzpumpen nach der Gattung des Anspruchs 1. Bei Kraftstoffeinspritzpumpen dieser Art greift an einen einarmigen Spannhebel eine verstellbare Regelfeder entgegen einer drehzahlabhängigen Kraft an. Der Spannhebel ist mit dem Starthebel verbunden, der mit einem Mengenverstellorgan der Kraftstoffeinspritzpumpe gekoppelt ist. In einem ersten Verstellbereich wird der Starthebel durch die drehzahlabhängige Kraft entgegen der Kraft einer sich am Schlepphebel abstützenden Startfeder zum Schlepphebel hin um den durch einen Anschlag begrenzten Betrag verschwenkt. In einem sich an den ersten Verstellbereich anschließenden zweiten Verstellbereich werden der Start- und Schlepphebel entgegen der Kraft einer Regelfeder verschwenkt.

Aufgrund des bei Direkteinspritzermotoren höher zu haltenden Einspritzdrucks machen sich Drosselverluste über der Drehzahl stärker bemerkbar, so daß, um eine Vollasteinspritzmenge bei höheren Drehzahlen zu bekommen, im niederen Drehzahlbereich unverhältnismäßig hohe Kraftstoffmengen zur Einspritzung kommen. Bei solchen Einspritzpumpen ergibt sich durch den hohen Anfangsdruck in den Einspritzleitungen zum einen eine bei zunehmender Drehzahl trompeten förmig abnehmende Einspritzmenge und zum anderen eine große Startmenge; diese große Menge ist jedoch für den Startvorgang nicht erforderlich und mithin hinsichtlich einer günstigen Verbrennung und geringer Schadstoffemission zu vermeiden.

Vorteile der Erfindung

Mit der Erfindung gemäß Anspruch 1 wird das im vorerwähnten Stand der Technik dargelegte Problem in technisch einfacher Weise im wesentlichen gelöst. Der Erfindung liegt der Gedanke zugrunde, den Regelschieberweg und mithin das zugehörige Förderende unterhalb des Regelschieberweges bei Vollastmenge zu verkürzen und in der Endphase des Startvorgangs den Schieberweg auf den bei Vollastmenge anzuheben. Dies wird vorteilhafterweise dadurch erreicht, daß man bei niederen Drehzahlen die zu hohe Einspritzmenge absenkt bei sonst gleichgestalteter Einspritzpumpe.

Vorteilhafte Weiterbildungen sind in den Unteransprüchen beschrieben. Mit Anspruch 2 wird ein einfacher Aufbau des Drehzahlreglers vorgeschlagen, bei dem ein verhältnismäßig kleiner Weg des Einspritzmengengliedes den kleinen Regelschieberweg von der Startstellung in die Stellung Saugvollast bewirkt; dieser sehr kleine Weg des Einspritzmengenstellgliedes wird in erwünschter Weise mit Anspruch 6 auf einen regeltechnisch ausführbaren Wert vergrößert.

Zeichnung

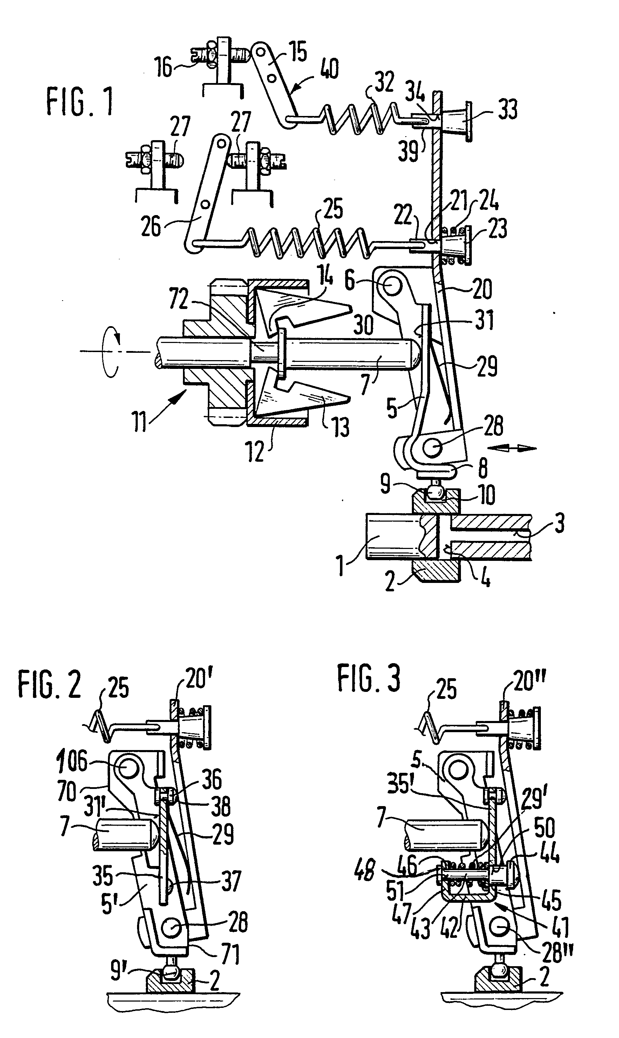

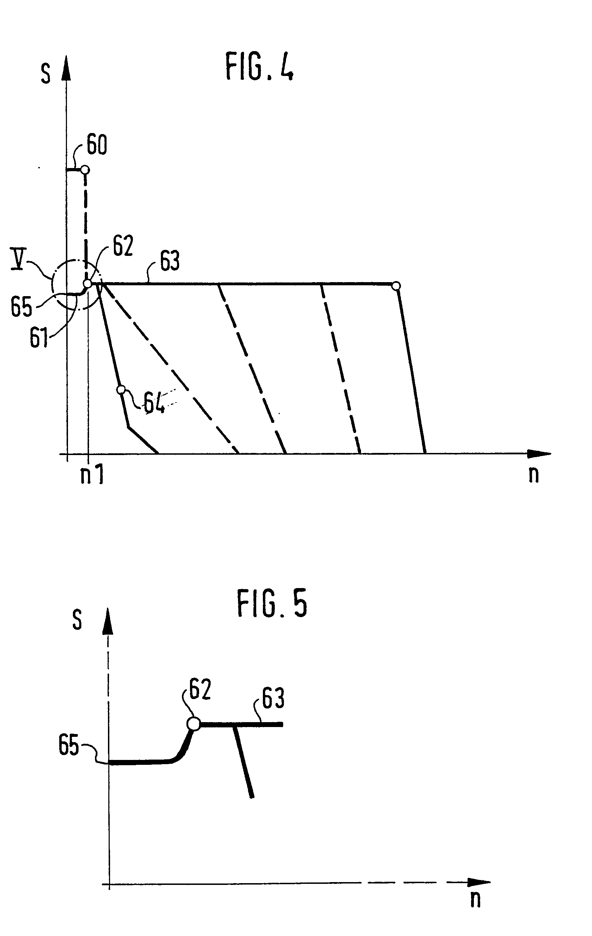

Ein Ausführungsbeispiel der Erfindung ist in der Zeichnung dargestellt und in der Figurenbeschreibung erläutert. Es zeigen jeweils in abschnittweisem Axialschnitt und vergrößerter Darstellung: Figur 1 das erste Beispiel eines Drehzahlreglers; Figur 2 eine weitere Ausführungsform; Figur 3 eine dritte Ausführungsform; und jeweils in schematischer Darstellung: Figur 4 das Reglerkennfeld für eine All drehzahlregelung; und Figur 5 eine stark vergrößerte Einzelheit des Reglerkennfeldes gemäß Abschnitt 5 in Figur 4.

Beschreibung des Ausführungsbeispiels

Der in Figur 1 dargestellte erfindungsgemäße Drehzahlregler besteht aus einem in einer Hubkolben-Verteilereinspritzpumpe eingebauten Drehzahlregler. Die Kraftstoffeinspritzpumpe weist in der nicht näher dargestellten Kraftstoffeinspritzpumpe einen Pumpenarbeitsraum begrenzenden Pumpenkolben 1 auf, der in bekannter Weise von einer nicht dargestellten und von der Brennkraftmaschine angetriebenen Nockenscheibe entgegen der Kraft einer ebenfalls nicht dargestellten Rückstellfeder in eine hin- und hergehende und gleichzeitig rotierende Bewegung versetzt wird. Auf dem Pumpenkolben 1 ist ein in Längsrichtung des Pumpenkolbens hin verschiebbares, als Ringschieber ausgeführtes Mengenverstellorgan 2 angeordnet, das eine Austrittsöffnung 4 eines mit dem Pumpenarbeitsraum verbundenen Entlastungskanals 3 im Laufe des Druckhubs des Pumpenkolbens 1 je nach Stellung des Ringschiebers früher oder später aufsteuert und damit das Förderende beziehungsweise die vom Pumpenkolben 1 in eine nicht dargestellte Druckleitung geförderte Fördermenge bestimmt. Der nach dem Aufsteuern abströmende Kraftstoff strömt in einen Saugraum zurück.

Die axiale Lage des Mengenverstellorgans 2 wird in bezug auf die Lage der Austrittsöffnung 4 im Pumpenkolben 1 durch einen einarmigen Starthebel 5 eines in einem der Kraftstoffversorgung des Pumpenarbeitsraums dienenden Saugraums der Pumpe eingebauten Drehzahlreglers gesteuert.

Der Regler besteht aus dem Starthebel 5, einem in derselben Ebene wie der Starthebel schwenkbaren einarmigen Schlepphebel 20, einer Regelfeder 25 sowie einer Leerlauffeder 32, die beide an den Schlepphebel 20 angelenkt sind und einem Drehzahlsignalgeber 11. Der Drehzahlsignalgeber 11 wird durch ein nicht näher dargestelltes Getriebe proportional zur Drehzahl des Motors bzw. des Pumpenkolbens 1 angetrieben und besitzt einen Trägerkörper 12, der in bekannter Weise in Taschen geführte Fliehgewichte 13 aufnimmt, die mit nasenförmigen Druckarmen 14 an antriebsseitigen Enden des auf einer Achse 72 des Drehzahlsignalgebers 11 der in Längsrichtung verschiebbaren Stellmuffe angreifen. Anstelle des als drehzahlabhängig arbeitenden Stellglieds dienender Drehzahlsignalgeber 11 kommen auch andere, z. B. hydraulisch oder pneumatisch betätigte Stellglieder, die an dem gleichen Angriffspunkt am Starthebel 5 angreifen, in Betracht.

Der Schlepphebel 20 ist um eine gehäusefest angeordnete Achse 28 drehbar, die aber auch einstellbar sein kann, indem sie in Längsrichtung des Pumpenkolbens verschoben wird, wie durch Pfeile angedeutet. Am Schlepphebel 20 ist eine Achse 6 angeordnet, an die der Starthebel angelenkt ist. Dieser Starthebel 5 erstreckt sich in Richtung Mengenverstellorgan 2. An dem sich zum Mengenverstellorgan 2 erstreckenden Ende 8 ist der Starthebel 5 gekröpft und hat einen als Mitnehmer dienenden kugelförmigen Zapfen 9, der in eine Ausnehmung 10 des Mengenverstellorgans 2 eingreift. Das Ende 8 des Starthebels 5 ist deshalb gekröpft, um ihn mit Abstand um die Achse 28 des Schlepphebels 20 herumzuführen. In Startstellung des Starthebels 5 bleibt ein Abstand zur Achse 28, um den sich der Starthebel 5 unter Einwirkung der Stellkraft des Drehzahlsignalgebers 11 gegen die Kraft einer Startfeder 29 bis zum Anschlag an die Achse 28 bewegen kann. Dieser Bewegung bis zur Achse 28 ist ein erster Verstellbereich. Die Startfeder ist eine Blattfeder, die an ihrem einen Ende am Starthebel 5 befestigt ist und sich am anderen Ende am Schlepphebel 20 abstützt. Im Bereich des die Achse 6 überragenden Endes hat der Schlepphebel 20 eine Bohrung 21, durch die ein Bolzen 22 hindurchgesteckt ist. Zwischen einem in der dargestellten Lage am Schlepphebel 20 anliegenden Kopf 23 des Bolzens 22 und dem Schlepphebel 20 ist eine Zwischenfeder 24 angeordnet. An dem dem Kopf 23 und der Zwischenfeder 24 abgewandten Ende des Bolzens 22 greift ein Ende einer als Zugfeder ausgebildeten Regelfeder 25 an, deren anderes Ende an einem durch Anschlag 27 in seinem Regelweg begrenzten Hebel 26 eingehängt ist. Außerdem greift an dem Schlepphebel 20 eine Leerlauffeder 32 an. Diese ist an einem Verbindungsbolzen 33 eingehängt. Der Verbindungsbolzen 33 ragt durch eine Ausnehmung 34 im Schlepphebel 20 und weist am anderen Ende einen Kopf 39 auf, der als Anschlag ausgebildet ist. Das andere Ende der Leerlauffeder 32 ist in ein Verstellteil 40 eingehängt, das als Einstellhebel 15 ausgebildet ist. Der Einstellhebel 15 ist mittels einer Justierschraube 16 zur Veränderung der Vorspannung der Leerlauffeder 32 einstellbar und arbeitet parallel zu der Regelfeder 25.

Die drehzahlabhängige Kraft des Drehzahlsignalgebers 11 schwenkt den Starthebel 5 gemäß Darstellung in Figur 1 entgegen dem Uhrzeigersinn im ersten Verstellbereich gegen die Kraft der Regelfeder 25, Startfeder 29 und der Leerlauffeder 32, bis der Starthebel 5 unter Verformung nur der Startfeder 29 an der als Anschlag ausgebildeten Achse 28 des Schlepphebels 20 anliegt. Bei weiterer Zunahme der drehzahlabhängigen Kraft schwenkt der Starthebel 5 und Schlepphebel 20 gemeinsam im Uhrzeigersinn um die Achse 28 in einem zweiten Verstellbereich. Mit diesem Starthebel 5 verbunden ist der Zapfen 9, der in das Mengenverstellorgan 2 eingreift. Das Mengenverstellorgan 2 steht in Ausgangsstellung des Starthebels bei geringer Fördermenge und wird dann im ersten Verstellbereich zu mehr Fördermenge verschoben, um dann wieder, im zweiten Verstellbereich, zu geringerer oder gleichbleibender Fördermenge verstellt zu werden.

In Figur 4 ist ein Funktionsdiagramm dieses erfindungsgemäßen Drehzahlreglers dargestellt, in dem über die Abszisse die Pumpendrehzahl in Umdrehungen/pro Minute und über die Ordinate der Weg S des Mengenverstellorgans 2 dargestellt ist. Dabei wurde gestrichelt der Kraftstoffeinspritzmengenverlauf auch für bisher bekannte Kraftstoffeinspritzpumpen in der Startphase mit eingezeichnet, wo von einer hohen Startmenge entsprechend Punkt 60 nach dem Start auf Vollastmenge gemäß Punkt 62 abgeregelt wird.

Bei diesem Ausführungsbeispiel kommt mit zunehmender Drehzahl-nach Start-der Anschlagkopf 44 zuerst zur Anlage an den Schlepphebel 20. In der Folge wird der Anschlagkopf 44 entgegen der Kraft der Startfeder 29' bis zur Anlage des ersten Anschlages 36 gegebenenfalls etwas verschoben und mit zunehmender Drehzahl bis zur Anlage des Anschlagkopfes 44 am Zwischenhebel 35' weiter verschoben. Dabei führt der Zwischenhebel analog zum Zwischenhebel von Figur 2 eine Kippbewegung entgegen dem Uhrzeigersinn um den ersten Anschlag 36 aus entsprechend dem ersten Verstellbereich. Die erfindungsgemäße Wegänderung des Mengenverstellorgans 2 mit "negativer Startmenge" ist als durchgezogene Linie 61 dargestellt. Die erfindungsgemäße Wegänderung des Mengenverstellweges bei "negativer Startmenge" ist nochmals in vergrößertem Maßstab in Figur 5 dargestellt. Bei Stillstand der Verteilereinspritzpumpe sind die Fliehgewichte 5 in Ruhe und die Stellmuffe 7 befindet sich in unterster Ausgangsstellung. Der Starthebel 5 und zugleich das Mengenverstellorgan 2 werden von der Startfeder 29 in die Startstellung gedrückt, das dem Bezugspunkt 65 in Figur 5 entspricht. Wird der Motor gestartet, bewegt sich die Stellmuffe 7 des Drehzahlsignalgebers 11 gegen den Starthebel 5, der sich gegen die Kraft der Startfeder 29 bewegt. Der Schlepphebel 20 wird während dieser Anfangsbewegung der Stellmuffe 7 des Drehzahlsignalgebers 11 von der Regelfeder 25 festgehalten, so daß der Starthebel 5 um die Achse 6 schwenkt. Diese Schwenkbewegung des Starthebels 5, bis er an der Achse 28 des Schlepphebels 20 anliegt, entspricht dem ersten Verstellbereich. Mit dieser Schwenkbewegung des Starthebels 5 bewegt sich das Mengenverstellorgan 2 zu mehr Kraftstofffördermenge und erreicht am Ende dieses ersten Verstellbereichs seine durch die Position 63 in Figur 5 gekennzeichnete Vollaststellung, bei der vom Pumpenkolben die Vollasteinspritzmenge gefördert wird. Der Starthebel 5 wirkt von der Anlage an die Achse 28 an wie ein zweiarmiger Hebel, d. h. bei zunehmender Bewegung der Stellmuffe 7 nach Anlage des Starthebels 5 an die Achse 28 bewegt der Starthebel 5 das Mengenverstellorgan 2 in Richtung geringerer Fördermenge zur Abregelung der Kraftstoffeinspritzmenge. Ausgehend von der Vollastkennlinie 63, wird, wenn die durch die Vorspannung der Regelfeder eingestellte drehzahlabhängige Kraft die vom Drehzahlsignalgeber aufgebrachte Kraft überschritten wird, abgeregelt.

In dem in Figur 2 dargestellten zweiten Ausführungsbeispiel sind die dem ersten Ausführungsbeispiel entsprechenden Teile gleich bezeichnet, geringfügig abgeänderte Teile sind mit einem Indexstrich versehen. Dieses Ausführungsbeispiel unterscheidet sich von dem in Figur 1 dargestellten durch eine verändernde Hebelanordnung. Auch hier ist der Schlepphebel 20' um die Achse 28 schwenkbar. Am Schlepphebel 20' greift die Regelfeder 25 an. Weiterhin ist hier der Starthebel 5' als zweiarmiger Hebel ausgeführt und gleichfalls um die Achse 28 schwenkbar. Der eine Arm des Starthebels 5' greift am Mengenverstellorgan 2 an, während der andere Arm sich nahezu parallel zum Schlepphebel 20' erstreckt. Am äußersten Ende dieses Arms des Starthebels 5' ist an eine Achse 106 ein Zwischenhebel 35 angelenkt, der sich zur Achse 28 hin erstreckt und zwischen dem Starthebel 5' und dem Schlepphebel 20' liegend eine Anlage für die Stellmuffe 7 bildet. Der Zwischenhebel 35 weist einen ersten Anschlag 36 und einen zweiten Anschlag 37 auf, die beide dem Schlepphebel 20' zugeordnet sind und zwischen denen auf der anderen Seite des Zwischenhebels 35 die Stellmuffe 7 angreift. Der erste Anschlag 36 nach dem Anlenkpunkt an der Achse 106 des Zwischenhebels 35 ist gegenüber einer geraden Verbindung zwischen Anschlag 7 und Achse 106 erhöht, also zum Schlepphebel 20 hin vorgelagert. Bei der Stellbewegung der Muffe kommt der Zwischenhebel 5' zunächst mit dem ersten Anschlag 36 und nach einer Kippbewegung um diesen ersten Anschlag 36 erst mit deren zweiten Anschlag 37 zur Anlage an den Schlepphebel 20'. Während dieser Kippbewegung führt der Starthebel 5' eine Schwenkbewegung entgegen dem Uhrzeigersinn weg vom Schlepphebel 20 aus.

Der erste Anschlag 36 ist an der abgewinkelten Anlagefläche 31' des Starthebels 5' angeordnet und als Niet, Schraube oder dergleichen mit entsprechendem halbkugelförmigem Nietkopf, der als Anschlagfläche dient, ausgeführt. Weiterhin ist in diesem Ausführungsbeispiel die ebenfalls als Blattfeder ausgebildete Startfeder 29 im Bereich des ersten Anschlags 36 am Zwischenhebel 35 befestigt, wobei die Startfeder bestrebt ist, den Zwischenhebel 35 in Richtung Stellmuffe 7 zu schwenken. Auch hier ist anfangs der Starthebel 5' und der Zwischenhebel 35 in einer Stellung, in der das Mengenverstellorgan 2 so eingestellt ist, daß eine Kraftstoffmenge unterhalb der Vollasteinspritzmenge gefördert wird. Im ersten Verstellbereich schwenkt dann der Starthebel 5', bewegt durch den Zwischenhebel 35 an das Mengenverstellorgan 2, wie oben beschrieben, zu einer Fördermengeneinstellung entsprechend Vollast. Im zweiten Verstellbereich wird dann von den Vollastkraftstoffeinspritzmenge wieder abgeregelt.

In Figur 3 ist eine Weiterbildung des Ausführungsbeispiels nach Figur 2 dargestellt, bei dem die entsprechenden Teile gleich bezeichnet sind, abgeänderte Teile sind mit Indexstrichen versehen. Aus Figur 3 ist erkennbar, daß am Ende des Zwischenhebels 35' in Richtung Achse 28'' ein U-förmig abgebogenes Teil 42 angeordnet ist. Anstelle des zweiten Anschlags 37 der Ausführung nach Figur 2 ist hier ein Anschlagbolzen 43 mit einem Anschlagkopf 44 versehen. Dieser hat eine erste Lagerstelle 45 in einer ersten Bohrung 50 im Zwischenhebel 5'' und eine zweite Lagerstelle 46 gleichachsig zu dieser ersten Bohrung in einer zweiten Bohrung 51 in der gegenüberliegenden Wange 47 des U-förmig abgebogenen Teils 42. Der Anschlagbolzen 43 hat am dem Anschlagkopf gegenüberliegenden Ende einen Anschlag 48, mit dem er durch die als Spiralfeder ausgebildete Startfeder 29' in Anlage an der Außenseite der Wange 47 gehalten wird. Die Spiralfeder umgibt den Anschlagbolzen und stützt sich zwischen Innenseite der Wange 47 und Anschlagkopf 44 ab.

Die Figuren 2 und 3 zeigen Modifikationen von Figur 1 mit einem Zwischenhebel 35, mittels dem die "negative Startmenge" feiner eingestellt werden kann, insbesondere durch große Stellmuffenwegänderungen bei geringen Mengenverstellorganänderungen. Bei Stillstand des Motors und des Drehzahlsignalgebers 11 wird der Starthebel 5 durch die Blattfeder 29 vom Schlepphebel 29 weggedrückt und das Mengenverstellorgan 2 in eine Stellung verschoben, bei der die gewünschte "negative" Startmenge beginnt.

## Ansprüche

1. Drehzahlregler für Kraftstoffeinspritzpumpen von Brennkraftmaschinen mit einem einarmigen, um eine wenigstens im wesentlichen ortsfeste Schlepphebelachse (28) schwenkbaren Schlepphebel (20), an den eine verstellbare Regelfeder (25) entgegen einer drehzahlabhängigen Kraft angreift, mit einem Starthebel (5), der mit einem Mengenverstellorgan (2) der Kraftstoffeinspritzpumpe gekoppelt ist und durch die drehzahlabhängige Kraft entgegen der Kraft einer sich am Schlepphebel (20) abstützenden Startfeder (29) in einem ersten Verstellbereich zum Schlepphebel (20) hin, um einen durch einen Anschlag (28) begrenzten Betrag bewegt in einem sich an den ersten Verstellbereich anschließenden zweiten Verstellbereich zusammen mit dem Schlepphebel (20) entgegen der Kraft der Regelfeder (25) schwenkbar angeordnet ist, dadurch gekennzeichnet, daß der Starthebel (5) durch die drehzahlabhängige Kraft im ersten Verstellbereich mit zunehmender Drehzahl entgegen der Schwenkbewegung im zweiten Verstellbereich schwenkbar ist.

2. Drehzahlregler nach Anspruch 1, dadurch gekennzeichnet, daß der Starthebel (5) ein einarmiger Hebel ist, der mittels einer Achse (6) auf dem Schlepphebel (20) gelagert ist.

3. Drehzahlregler nach Anspruch 2, dadurch gekennzeichnet, daß der Starthebel (5) als Anschlag einen Teil der Schlepphebelachse (28) hat.

4. Drehzahlregler nach Anspruch 1, dadurch gekennzeichnet, daß der Starthebel (5') ein um eine wenigstens im wesentlichen ortsfeste Achse (28) schwenkbarer zweiarmiger Hebel ist, dessen einer Arm (71) mit dem Mengenverstellorgan (2) verbunden ist, an dessen anderem Hebelarm (70) ein einarmiger, sich zur Achse (28) des Schlepphebels hin erstreckender, um eine auf dem Starthebel (5') angeordneten Achse (106) schwenkbarem Zwischenhebel (35) gelagert ist, an dem die drehzahlabhängige Kraft und die sich andererseits am Schlepphebel (20) abstützende Startfeder (29) angreifen und der zur Anlage an dem Schlepphebel (20) einen ersten in Schwenkrichtung gegen die Startfeder (29) vorgelagerten Anschlag (36) und zur Begrenzung des ersten Verstellbereichs nach Anlage des ersten Anschlages am Schlepphebel (20) einen zweiten in Schwenkrichtung nachgeordneten Anschlag (37) aufweist.

5. Drehzahlregler nach Anspruch 4, dadurch gekennzeichnet, daß der erste Anschlag (36) zwischen Achse (106) des Zwischenhebels (35) und Angriffspunkt der drehzahlabhängigen Kraft liegt, wobei der Angriffspunkt der drehzahlabhängigen Kraft zwischen dem ersten Anschlag (36) und zweiten Anschlag (37) liegt.

6. Drehzahlregler nach Anspruch 4 oder 5, dadurch gekennzeichnet, daß als zweiter Anschlag (37) ein durch die Startfeder (29') vorgespannter, bis zur Anlage an den Zwischenhebel verschiebbarer Anschlag (44) vorgesehen ist, der sich einerseits am Zwischenhebel (35) und andererseits am Spannhebel (20") abstützt.

7. Drehzahlregler nach Anspruch 6, dadurch gekennzeichnet, daß die Startfeder (29') eine Schraubenfeder ist.

8. Drehzahlregler nach einem der vorherigen Ansprüche, dadurch gekennzeichnet, daß eine Leerlauffeder (32) parallel zur Hauptregelfeder (25) einerseits am Spannhebel (20) angreift und andererseits an einem im Gehäuse gelagerten verstellbaren Hebel (15) befestigt ist und daß in Reihe zur Hauptregelfeder (25) eine sich zwischen Spannhebel (20) und Ende der Hauptregelfeder (23) abstützende Zwischenfeder (24) angeordnet ist.

FIG. 1

FIG. 2

FIG. 3

# FIG. 4

# FIG. 5